# EUROPEAN PATENT APPLICATION

(11) **EP 2 000 954 A1**
(43) Date of publication of application: **10.12.2008**
(21) Application number: 07109426.2
(22) Date of filing: 01.06.2007
(51) Int. Cl.: G06K 15/00, B41J 11/46, G06K 9/00, B41C 1/10, B41J 2/005, H04N 1/40

(54) **Printing crop marks**

(71) Applicant: HEWLETT-PACKARD DEVELOPMENT COMPANY, L.P., Houston TX 77070 (US)
(72) Inventor: Bello, Santiago, 08174, Sant Cugat del Valles (ES); Domingo, Xavier, 08174, Sant Cugat del Valles (ES); Lagares, Javier S., 08174, Sant Cugat del Valles (ES)
(74) Representative: Durville, Guillaume

(57) **Abstract**

A method, printer (42) and computer program for printing crop marks (32) indicative of an image region (12). The image region (12) comprises a region containing an image (10). It is determined if the size of the image region (12) is such that at least part of the image region (12) is within a crop area (26) surrounding a printable region (24,30) of a printer (42) for a given media. If it is determined that at least part of the image region (12) is within the crop area (26), the printer (42) is controlled to print one or more crop marks (32) within the crop area (26).

## Description

### Field of the Invention

This invention relates to the field of printing, and more particularly to the field of printing crop marks indicative of an image region.

### Background

Crop marks are widely known in the field of printing and are typically used when the size of the print media on which an image is to be printed does not match the desired size of the image.

There are several reasons that the size of the print media may differ from that of the image to be printed, including:
the printing device does not support the desired print media size;
it may be faster to print to two small sheets of print media than to a single larger sheet of print media; and
most printers do not support full bleed (i.e. borderless) printing, thereby preventing the printing of an image which is the same size as the print media, because the printer needs to add some extra margins surrounding the original image (often due to internal limitations of the printer). Such margins are commonly known as physical margins or crop areas.

A known approach to dealing with the situations such as those listed above is to print the image on a larger sheet along with crop marks for indicating the image region and where the print media is to be trimmed or cropped to a desired size.

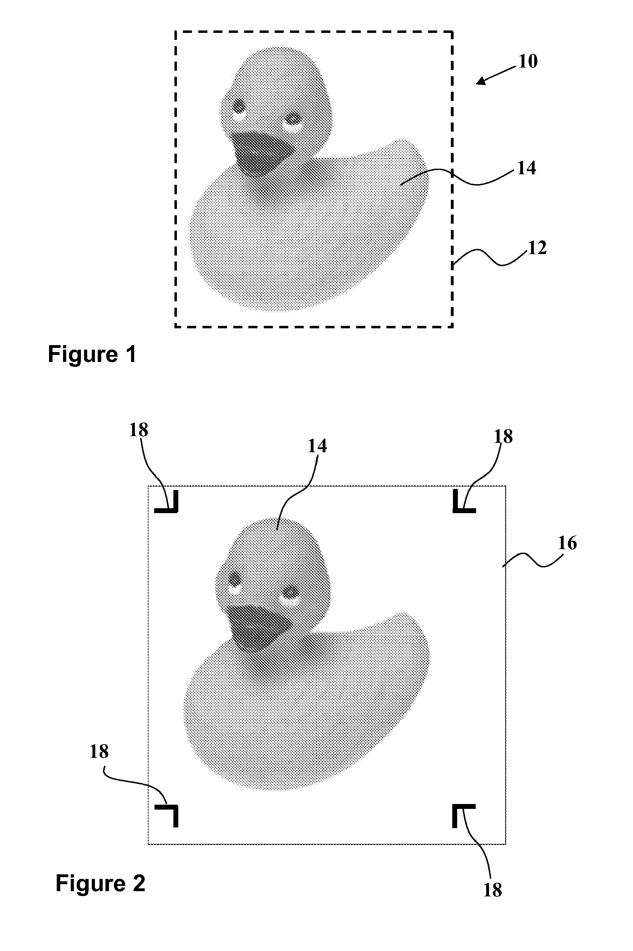

For example, consider printing the image shown in Figure 1. The image 10 comprises a rectangular image region (indicated by a rectangle 12) containing a picture of a rubber duck 14. Printing the image of Figure 1 onto print media 16 (the print media 16 being larger than the image 10) with crop marks 18 using a conventional approach would result in printed media as shown in Figure 2.

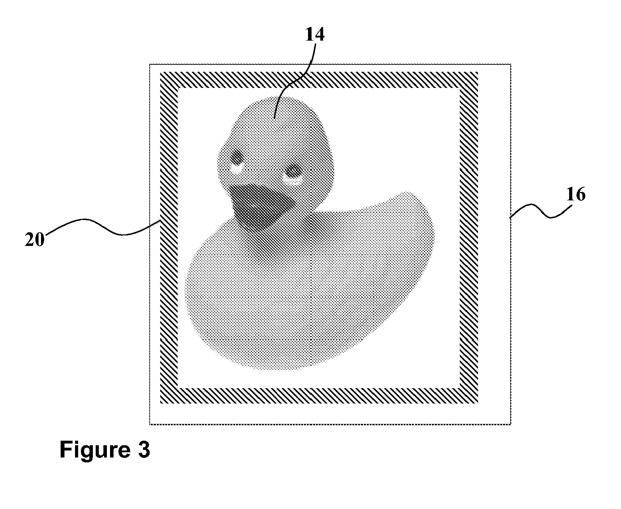

Referring to Figure 2, it can be understood that the crop marks 18 increase the size of the region that is printed to the print media 16. This is because the crop marks 18 must be printed in addition to the image 10, and the crop marks 18 are located outside of the image region 12 of the image 10. Thus, the image 10 is printed farther away from the edges of the media. In other words, an additional area (as indicated by the hatched region 20 in Figure 3) surrounding the image 10 has been added to the image region 12. Consequently, a larger sheet of print media is required in order to print the image 10 at the desired size, or the size of the image 10 must be reduced to fit on the sheet of media 16 along with the crop marks 18.

### Brief Description of the Drawings

For a better understanding of the invention, embodiments will now be described, purely by way of example, with reference to the accompanying drawings, in which:
Figure 1 shows an image to be printed using a conventional printing method;
Figure 2 shows the image Figure 1 printed onto print media with crop marks using a conventional printing method;
Figure 3 illustrates the additional area required by the printed image of Figure 2;
Figure 4 shows the image of Figure 1 printed on print media with crop marks using a method according to an embodiment of the invention, wherein the image region is contained within the printable region of the printer;
Figure 5 shows the image of Figure 1 printed on print media with crop marks using a method according to an embodiment of the invention, wherein a portion of the image region is within the physical margin surrounding the printable region of the printer;
Figure 6 shows the image of Figure 1 printed on print media with crop marks using a method according to another embodiment of the invention, wherein the width of the image region is the same as the width of the print media; and
Figure 7 illustrates a printing system comprising a printer according to an embodiment of the invention.

### Detailed Description of the Invention

There is provided a method of printing crop marks indicative of an image region using a printer, wherein the crop marks are printed within the physical margins or crop areas of the printer.

By employing such a method within a printer, conventional printing limitations imposed by the printer may be bypassed in order to print crop marks within regions of print media that were previously prevented from being printed to.

In ink-based printers, the ink is typically liquid or viscous and may create cockle in the printing media when it is deposited onto the printing media. Media cockle is particularly problematic when it occurs near the edges of the print media, because it can cause the media to contact parts of the printer which it should otherwise be separated from. For example, media cockle may cause the media to contact one or more nozzles of the print head resulting in smudging of ink or jamming of the media. To avoid such problems, conventional printers are designed to avoid printing close to the edges of the print media, and the areas at the edges of the print media which are not printed on are typically referred to as physical margins, crop areas or forbidden areas.

Media cockle is common when printing images or photos (especially if they have a dark background or similar) due to the increased amount of it that must be deposited. However, media cockle is less prevalent when printing lines or narrow portions of ink, since only low amounts of ink must be deposited in order to represent such shapes.

Embodiments therefore take advantage of the fact that printing small symbols or lines reduces the amount of media cockle and control a printer to print crop marks within the physical margins of the printer. By printing crop marks which are small, line-based symbols, the crop marks do not create any significant media cockle, even when printed near one or more edges of the print media. The area of media to which an image may be printed can therefore be maximized, since any additional area needed for printing surrounding crop marks may be provided within the physical margins of the printer.

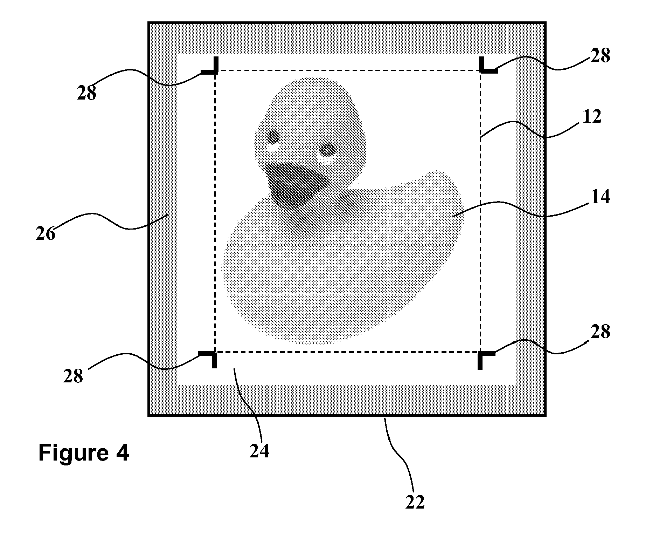

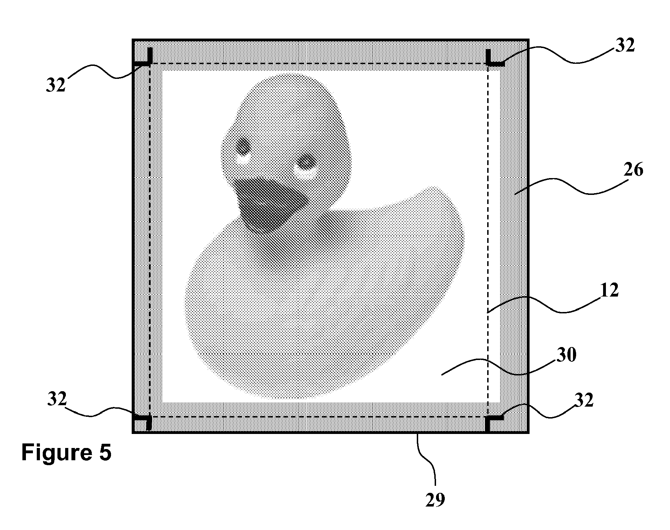

Referring now to Figures 4 and 5, an embodiment of a method of printing crop marks indicative of an image region will now be described.

The image region comprises a rectangular region 12 containing an image 10 of a rubber duck 14. For the avoidance of doubt, reference to a rectangular region includes reference to a region having sides of equal length, i.e. a square region.

When printing the image 10 onto print media 22 (the print media 22 being sized so that it has a printable region 24 larger than the image region 12) as shown in Figure 4, the printer determines if the size of the image region 12 is such that at least part of the image region 12 is within a physical margin 26 surrounding the printable region 24.

In the example of Figure 4, none of the image region 12 is within a margin 26 surrounding the printable region 24. More specifically, the image 10 is located on the print media 22 so that there is an area of the printable region 24 between each edge of the image region 12 and the physical margin 26. Thus, the image 10 can be printed on the print media 22 along with crop marks 26 indicative of the image region 12.

In the example of Figure 4, each crop mark 28 is printed at a different corner of the image region 12, within the area of the printable region 24 between the image region 12 and the physical margin (i.e. not within the image region 12 or on its edges). Each crop mark 28 comprises two perpendicular lines. A first line of each crop mark 28 is in the same direction as a first edge of a respective corner of the image region 12, and second line of each crop mark 28 is in the same direction as a second edge of the respective corner of the image region 12.

If on the other hand, the image 10 is to be printed onto print media 29 as shown in Figure 5 (the print media 29 being sized so that it has a printable region 30 smaller than the image region 12), the printer determines that the size of the image region 12 is such that at least part of the image region 12 is within a physical margin 26 surrounding the printable region 30.

In the example of Figure 5, a portion of the image region 12 is within the physical margin 26 surrounding the printable region 30. More specifically, the image 10 is located on the print media 29 so that three of the four edges of the image region 12 are located with the physical margin 26. Thus, even though the size of the media 29 has been chosen so that the size of the printable region 30 closely matches the size of the image of the rubber duck 14, a conventional printing method will not be able to print the image 10 on the media 29 along with crop marks 32 indicative of the image region 12.

The method according to the present embodiment, on the other hand, determines that at least part of the image region 12 is within the physical margin 26 and controls the printer to print the crop marks 32 within the physical margin 26, since only printing crop marks 32 within the physical margin 26 will not create any significant media cockle near the edges of the print media 29.

In other words, the printer determines that the image of the duck 14 can be printed within the printable region 30, whereas the crop marks 32 indicative of the image region 12 can be printed within the physical margin 26, without causing significant media cockle near the edges of the print media 29. Thus, there is no need to increase the size of media 29.

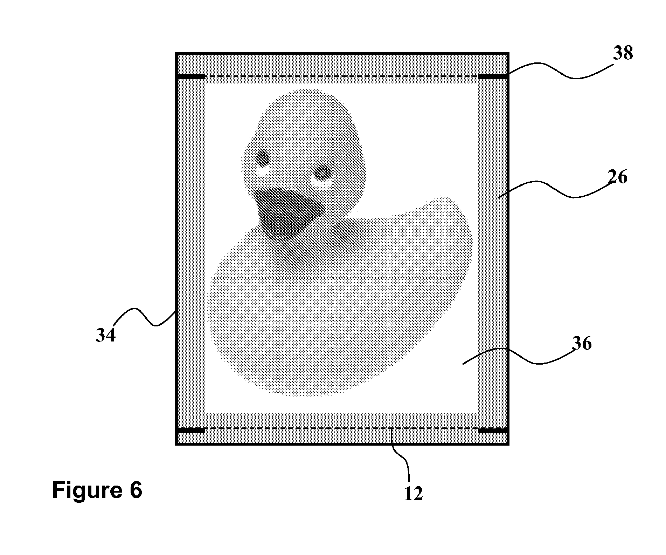

Referring now to Figure 6, an alternative embodiment will now be described, wherein the width of the image region 12 is the same as the width of the print media 34. More specifically, the image 10 is located on the print media 34 so that two opposing edges of the image region 12 correspond to the position of two opposing edges of the print media 34, and that the other two opposing edges of the image regions are within a margin 26 surrounding the printable region 36 of the print media 34.

In this embodiment, the printer is further arranged to determine if the size of the image region 12 is such that at least one edge of the image region 12 corresponds to the position of an edge of the margin 26. Thus, in the example of Figure 6, the printer determines that two edges of the image region 12 correspond to two respective edges of the margin 26, these edges also being edges of the print media 34. Here, the vertical edges of the image region 12 correspond with the vertical edges of print media. Of course, in other embodiments, the one or both of the horizontal edges of image region 12 may correspond with the horizontal edges of the print media 34. Because the edges of the image region 12 and the margin 26 correspond, there is no need to print crop marks indicating the location of such edges and the printer does not print crop marks indicative of such edges. Here, the printer determines that the other two edges of the image region 12 are within the margin 26 and prints crop marks 38 indicative of the edges within the margin 26.

Since each crop mark 38 only indicates a single edge of the image region 12, each crop mark 38 comprises a single line in the same direction as the edge of the image region 12 it is indicative of.

It will be understood that embodiments of the invention take advantage of the fact that a crop mark may be just a single line and require only a minimal amount of ink to be printed, therefore producing little or no media cockle. Typically, publishing tools are not aware of internal limitations of a printer and so are unable to determine whether or not printing certain data, such as crop marks, will result in unacceptable degrees of media cockle. Embodiments solve this problem by analyzing the particulars of the print request (i.e. the image region, and the media) to determine whether or not crop marks must be printed within the physical margin, and whether or not such printed crop marks will create media cockle of a magnitude greater than an acceptable value.

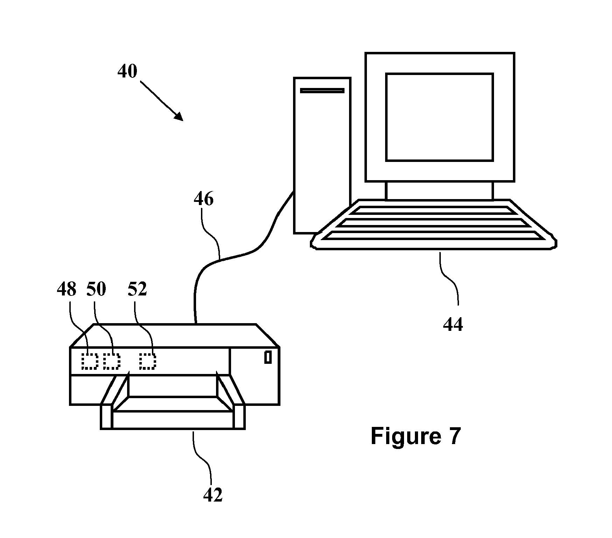

Referring now to Figure 7, a printing system comprising a printer according to an embodiment will now be described.

The printing system 40 comprises a printer 42 in communication with a computer 44 via a suitable communication link 46. The communication link 46 may, of course, be wired or wireless, and use any communication protocol which is suitable for communicating data from the computer 44 to the printer 42.

The printer 42 is adapted to receive image data from the computer 44 via the communication link 46 and to print crop marks indicative of an image region, the image region being a region containing an image represented by the image data. In particular, the printer 42 comprises processing means 48 and controller unit 50.

The processing means 48 are adapted to determine if the size of the image region is such that at least part of the image region is within a margin surrounding a printable region of the printer 42 for a given media.

The controller unit 50 is adapted to control the printer to print one or more crop marks within the margin if it is determined that at least part of the image region is within the margin.

The printer also comprises a cockle determining unit 52 adapted to determine an amount of cockle in the media that will be caused by printing one or more crop marks within the margin. In general, cropmarks such as those discussed in the embodiments will not create significant media cockle, and therefore such a cockle determining unit 52 may be superfluous to requirements. Its inclusion may, however, be preferable when using particular print media in specific environmental conditions where sensitivity to media cockle is of great importanhce.

If the cockle determining unit 52 determines an amount of cockle is less than or equal to a predetermined acceptable limit or desirable value, the controller unit 50 controls the printer to print the one or more crop marks within the margin. Conversely, if the cockle determining unit 52 determines an amount of cockle is greater than a predetermined acceptable limit or desirable value, the controller unit 50 prevents the printer from printing the one or more crop marks within the margin.

It will be appreciated that the predetermined acceptable limit for cockle may be adjusted as necessary. Factors affecting the acceptable limit may include things such as the type of print media, and the spacing between the print head of the printer and the media.

While specific embodiments have been described herein for purposes of illustration, various modifications will be apparent to a person skilled in the art and may be made without departing from the scope of the invention.

For example, a crop mark need not necessarily comprise a line for each edge of the image region it is indicative of. Instead, a crop mark may comprise a symbol having an edge for each edge of the image region it is indicative of. Each edge of such a symbol can be in the same direction as the respective edge of the image region it is indicative of. Thus, to indicate a corner of an image region, a crop mark may comprise a symbol having two perpendicular edges.

## Claims

1. A method of printing crop marks indicative of an image region using a printer, the image region being a region containing an image, wherein the method comprises the steps of:
determining if the size of the image region is such that at least part of the image region including a border of the image region is within a crop area surrounding a printable region of the printer for a given media;
if it is determined that at least part of the image region is within the crop area, controlling the printer to print one or more crop marks within the crop area.

2. A method according to claim 1, wherein the step of controlling the printer is preceded by the step of:
determining an amount of cockle in the media that will be caused by printing one or more crop marks indicative of the image region within the crop area,
and wherein the step of controlling is undertaken if the determined amount of cockle is less than a desired value.

3. A method according to claim 1 or 2, further comprising the steps of:
determining if the size of the image region is such that at least one edge of the image region corresponds to the position of an edge of the crop area; and
if it is determined that at least one edge of the image region corresponds to the position of an edge of the crop area, controlling the printer to not print one or more crop marks indicative of the at least one edge.

4. A method according to any preceding claim, wherein a crop mark comprises a line for each edge of the image region it is indicative of, each line being in the same direction as the respective edge of the image region it is indicative of.

5. A computer program comprising computer program code means adapted to perform all of the steps of any of claims 1 to 4 when said program is run on a computer.

6. A printer adapted to print crop marks indicative of an image region, the image region being a region containing an image, wherein the printer comprises:
processing means adapted to determine if the size of the image region is such that at least part of the image region including a border of the image region is within a crop area surrounding a printable region of the printer for a given media; and
a controller unit adapted to control the printer to print one or more crop marks within the crop area if it is determined that at least part of the image region is within the crop area.

7. A printer according to claim 6, further comprising:
a cockle determining unit adapted to determine an amount of cockle in the media that will be caused by printing one or more crop marks indicative of the image region within the crop area,
and wherein the controller unit is adapted to control the printer to print the one or more crop marks if the cockle determining unit determines an amount of cockle is less than a desired value.

8. A printer according to claim 6 or 7, wherein the processing means are adapted to determine if the size of the image region is such that at least one edge of the image region corresponds to the position of an edge of the crop area,
and wherein the controller unit is adapted to control the printer to not print one or more crop marks indicative of the at least one edge if it is determined that at least one edge of the image region corresponds to the position of an edge of the crop area.

9. A printer according to any of claims 6 to 8, wherein a crop mark comprises a line for each edge of the image region it is indicative of, each line being in the same direction as the respective edge of the image region it is indicative of.

10. A printing system comprising:
a printer according to any of claims 6 to 9;
a computer in communication with the printer, the computer being adapted to provide image data to the printer.
